# EUROPEAN PATENT APPLICATION

(11) **EP 3 761 164 A1**
(43) Date of publication of application: **06.01.2021**
(21) Application number: 19382578.3
(22) Date of filing: 05.07.2019
(51) Int. Cl.: G06F 7/58

(54) **ENTROPY PROVIDER**

(71) Applicant: Quside Technologies S.L., 08860 Barcelona (ES)
(72) Inventor: ABELLAN, Carlos, 08860 Barcelona (ES)
(74) Representative: Grünecker Patent- und Rechtsanwälte PartG mbB

(57) **Abstract**

An entropy provider for providing entropy to a computing device external to the entropy provider, the entropy provider comprising a power source and an entropy supply, wherein the power source is adapted to provide power to the entropy supply and wherein the entropy provider comprises transfer means for transferring the entropy from the entropy supply to an external computing device.

## Description

The invention concerns an entropy provider for providing entropy to a computing device external to the entropy provider according to claim 1 and a method for transferring entropy from an entropy provider to a computing device external to the entropy provider according to claim 9.

### Prior art

Computing devices have become a very important part in everyday life. This does not only refer to the computing devices used by their owners privately, for example at home (in the form of personal computers) or while they are on the move (mobile devices like laptops, smartphones and the like), but this also refers to the computing devices used at work. Further, this refers to inexpensive sensors and actuators used for example as part of devices connected to the internet (Internet of Things, loT). These may exchange private and/or sensitive information like in smart home environments. Further application of such devices can be found in industry plants, specifically in the field known as "Industry 4.0".

In view of the sensitive data usually processed at work but also sensitive data used in the private field (banking accounts or communications in general), the use of entropy in the form of, for example, random numbers or specifically designed sequences of bits has become more important. In some loT scenarios, the security of communications and data transfer in general might even have direct influence on the physical security of people and/or property, for example in the field of power and water supply.

The generation and use of entropy usually requires specifically adapted programs and/or specifically adapted hardware, for example in the form of entropy generators that generate entropy using physical processes that, by their nature, are random. Generating unpredictable random numbers at fast rates, however, is challenging. The generation of entropy with such generators can require significant amounts of space or processing complexity. This could result in less preferable experiences by the user of the computing device on which the random number generation is running or it might be completely unaffordable by some loT-devices that require extreme integration or low complexity. These requirements make the generation of high-quality random values even more challenging, thus affecting the security of communications between devices and data transfer in general.

While there are systems known that can directly communicate with external servers (for example in the field of managing banking accounts) that create tokens or random numbers permanently, devices that provide entropy to a specific computing device used by a user are known to be provided internally to those computing devices or provided in a manner that makes use of the hardware of the computing devices (for example in the form of USB sticks on which specific programs are stored that are finally run by the computing system to which the USB stick is connected). They make thus use of the processing capabilities or power of the device to which they are mounted.

While those mobile devices like USB sticks can be carried along with the user and, for example, used with a plurality of computing devices, they still suffer from the disadvantages mentioned above.

### Problem

The technical problem to be solved by the present invention is, therefore, to provide a means that allows for providing or generating entropy used by a computing device while, at the same time, preventing disadvantageous experiences by the user and not requiring, or at least reducing, the requirement of additional hardware.

### Solution

This problem is solved by the entropy provider according to independent claim 1 and the method for providing entropy to a computing device using a corresponding entropy provider according to claim 9. Preferred embodiments are provided in the dependent claims.

The entropy provider for providing entropy to a computing device external to the entropy provider according to the invention comprises a power source and an entropy supply, wherein the power source is adapted to provide power to the entropy supply and wherein the entropy provider comprises transfer means for transferring the entropy from the entropy supply to an external computing device.

The computing device external to the entropy provider may be any device with computing capabilities. This does not refer to isolated devices for storing data. The computing devices should thus at least possess the capability of processing, i.e. using the entropy (for example for encrypting communications). The computing devices may, however, not be limited to devices like smartphones or personal computers. Also industry plants and devices from the field of "Internet of Things", loT, like refrigerators, sensors and the like, to name a few examples, are considered as computing devices that can be external to the entropy provider and can be provided with entropy if needed.

The entropy provider according to the invention is thus designed to generate entropy (for example in the form of random numbers or a random sequence of bits) in a manner that is independent from the processing capabilities of the external computing device and transfers the random numbers after their generation to the specific computing device, but only requiring that the external computing device is provided with sufficient storage for storing the entropy.

As the entropy provider does not require a power source external to the entropy provider, it can be used to provide entropy at any location, thereby making it easier for the user to make use of the thus generated entropy in any environment and to make it available to distributed devices in, for instance, production plants.

The transfer means according to the invention are transfer means that are, preferably, specifically adapted for only transferring data in the form of entropy or, potentially, additional data used for further processing the entropy. The transfer means are, however, not intended or designed for also transferring energy from the entropy generator to the external computing device. The energy generated by the power source can thus be completely used by the entropy provider to generate and/or manage and/or transfer the entropy. The entropy supply according to the invention is not necessarily able to, on its own, generate entropy but may only be able to store the entropy and can, thus, be also embodied in the form of a storage device like a flash storage or other solid-state storage.

In one embodiment, the entropy supply comprises an entropy generator for generating the entropy.

With this, it is possible to generate the entropy with the entropy provider "on the fly", for example in case the entropy provider is connected to an external computing device. Additionally, as long as the entropy provider is not connected to an external computing device, the power supply of the entropy provider may still allow for generating entropy, thus allowing the entropy provider to generate a "pool" of entropy that can, for example, be stored in a storage device internal to the entropy provider for later use.

In a further embodiment, the entropy provider comprises a control means for controlling the generation of entropy by the entropy generator and/or the provision of power from the power source to the entropy generator.

With this control means, the management of the entropy generated and the power used by the entropy provider is possible. As the entropy provider according to the invention is a self-standing device that is not necessarily connected to an external power source, the power available to the entropy provider is necessarily limited. By managing the use of this power with the control means, the lifetime and usability of the entropy provider can be increased.

Furthermore, the control means may comprise at least one button that, upon actuation, can cause the power supply to provide power to the entropy generator and/or causes the entropy generator to generate entropy and/or causes the entropy provider to provide entropy generated by the entropy generator to an external computing device.

By providing the control means with such a button, the functionalities of the entropy provider can be controlled by a user according to his or her needs, thereby making the user-defined management of the entropy easier.

In an alternative embodiment, the entropy supply comprises a storage for storing entropy and wherein the entropy provider comprises a receiving means for receiving entropy from an external entropy source and wherein the entropy provider is adapted to store entropy received from the external entropy source in the storage.

While there may be a storage device associated with the entropy generator according to the above embodiments, this embodiment is intended to refer to an entropy provider that does not comprise an entropy generator internal to the entropy provider, or at least refers to a storage device in the entropy provider that is not connected to such an entropy generator. This storage device can only receive the entropy generated somewhere else and can store the respective entropy in the storage.

The storage according to this embodiment may either be provided as a volatile or nonvolatile storage. If it is provided in the form of a volatile storage, it may be provided that the volatile storage is permanently powered by the power source in order to maintain the entropy stored in the storage.

With this embodiment, the entropy provider can be realized as an inexpensive device that only needs to provide storage capability and processing means that allow for receiving and transferring the entropy to an external computing device. As the storage and transfer of data do not require significant amounts of energy, the power source can be dimensioned small, thus reducing the overall size of the entropy provider, and overall simplifying the architecture of the external computing device (like a sensor, actuator or computing device) significantly.

In one embodiment, the entropy provider comprises control means for controlling the receiving of entropy from an external entropy source and/or the provision of entropy from the storage to an external computing device via the transfer means, wherein the control means optionally comprises actuation means that, upon actuation, cause the entropy provider to start receiving entropy from the external entropy source and/or start providing entropy from the storage to the external computing device.

With this control means, the management of the receiving, storing and providing of entropy can be provided in an efficient manner, thereby resulting in the efficient management of the energy available via the power source. If actuation means, for example in the form of touchscreens or buttons on mobile applications running on smartphones or the like, are provided, manual control of this management is provided for the user.

In one further embodiment, the entropy comprises random numbers and/or a random sequence of bits.

Depending on the field of application of the respective entropy, the use of either random numbers or the use of a random sequence of bits may be advantageous. The random numbers can have specific length (for example 100 digits). The random sequence of bits may also be a sequence of a specific length where only the provision of 0's and 1's in this sequence is in fact random, as for example 128 or 256 full entropy bits. On the other hand, it may also be provided that the random numbers and/or the random sequence of bits have a random/arbitrary length up to a maximum length and/or comprising at least a minimum length (for example 10 digits different from zero or at least 20 bits).

In a further embodiment, the power source comprises at least one of: a battery, a rechargeable battery that can be recharged via a power supply external to the entropy provider, a solar cell; and/or wherein the transfer means comprise at least one of: a wireless transmitter for wirelessly transmitting entropy to an external computing device, a port for connecting a cable for data transfer for transferring entropy to an external computing device.

The respective power sources allow for a wide area of application of the entropy provider where specifically the use of solar cells makes the entropy provider completely independent from any external power source while the use of batteries or rechargeable batteries provides a more stable power supply. The use of a wireless transmitter makes the transfer of the entropy easy for the user and does not require the availability of physical ports. The use of a physical port for a cabled connection of the entropy provider and the external computing device reduces the risk of malicious attackers getting access to the entropy provided from the entropy provider to the external computing device. Near-field wireless transmission can provide both the convenience of wireless connectivity and risk reduction in view of potentially malicious attackers.

The method for transferring entropy from an entropy provider to a computing device external to the entropy provider, the entropy provider comprising a power source and an entropy supply, according to the invention, comprises that the power source provides power to the entropy supply and wherein the entropy provider comprises transfer means that transfer the entropy from the entropy supply to the external computing device when the entropy provider and the external computing device are connected via the transfer means.

This method allows for easy and efficient provision of entropy to an external computing device while, at the same time, not negatively influencing the experience of the user while using the external computing device.

In one embodiment, the entropy supply comprises an entropy generator for generating the entropy and wherein the entropy generator generates entropy when it is powered by the power source.

With this embodiment of the method, the entropy can be generated with the entropy provider itself, thus ensuring that, in principle, any required amount of entropy can be generated as necessary. If, for example, an external computing device requires 100 MB of entropy, this entropy can be generated with the entropy generator either while a connection with the external computing device is established or already before such a connection is established, thus only requiring further transfer of the already generated entropy. If additional entropy is required, it can be generated as need may be.

Further, the entropy provider can comprise a control means that controls the generation of entropy by the entropy generator and/or the provision of power from the power source to the entropy generator.

With this embodiment, the management of the entropy and the available power is realized in an efficient manner.

It may also be provided that the control means comprises at least one button that, upon actuation, causes the power supply to start providing power to the entropy generator and/or causes the entropy generator to generate entropy and/or causes the entropy provider to provide entropy generated by the entropy generator to an external computing device.

With this embodiment, user-dependent management of the available entropy and/or power is realized.

In an alternative embodiment, the entropy supply comprises a storage that stores entropy and wherein the entropy provider comprises a receiving means that receives entropy from an external entropy source when the entropy provider is connected to the external entropy source via the receiving means and wherein the entropy provider stores entropy received from the external entropy source in the storage, wherein, optionally, the storage stores the entropy without requiring energy from the power source.

With this embodiment the entropy provider acts as portable entropy storage allowing for transferring entropy from the actual entropy generator (for example a specifically dedicated computing device) to the computing device that will actually make use of the entropy generated. The embodiment makes it quite easy for the user to transfer his required entropy.

In a further embodiment, the entropy provider comprises control means that control the receiving of entropy from the external entropy source and/or the provision of entropy from the storage to the external computing device via the transfer means, wherein the control means optionally comprises actuation means that, upon actuation, cause the entropy provider to start receiving entropy from the external entropy source and/or start providing entropy from the storage to the external computing device and/or provides the same entropy to more than one external computing device.

With this, the management of the provision of entropy and the power management of the power source can be facilitated in an efficient manner and may also provide for manual management of the same.

In one embodiment, the entropy comprises random numbers and/or a random sequence of bits.

The use of random numbers or a random sequence of bits may be advantageous depending on the field of application. Specifically, the random sequence of bits may be used when encrypting communication and/or in authentication whereas the random numbers may be used, for example, in the field of gaming, randomized algorithms or identification for accessing specific accounts.

### Brief description of the drawings

- Figure 1: shows a schematic depiction of a general embodiment of an entropy provider according to the invention
- Figure 2: shows an embodiment of an entropy provider comprising control means with at least one button according to one embodiment
- Figure 3: an embodiment of the entropy provider comprising a storage for storing the entropy

### Detailed description

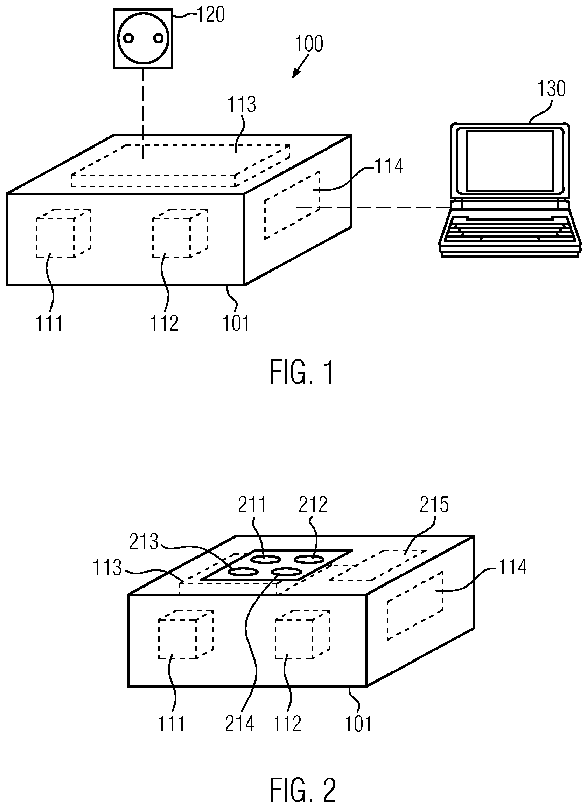

Figure 1 shows an entropy provider 100 according to one embodiment of the invention. The entropy provider 100 is depicted in figure 1 in connection with an external computing device 130. The entropy provider is, according to the invention, adapted to transfer entropy to the external computing device to which it is connected.

For this, the entropy provider 100 comprises at least an entropy supply 111 and transfer means 114 for transferring the entropy from the entropy supply 111 to the external computing device.

The transfer means 114 may be embodied in the form of either wireless transfer means or wired transfer means. This means in the case of wireless transfer means that the transfer means 114 comprise at least a wireless transmitter that can generate, for example, electromagnetic signals or acoustic signals or other signals that do not require a cable for transferring data. By modulating these signals, data in the form of the entropy from the entropy supply can be provided from the entropy provider via the transfer means 114 to the external computing device. For example, the transfer means 114 may be provided in the form of a commonly known wireless transmitter or a wireless transceiver.

In the case of the transfer means being embodied in the form of cabled transfer means, the transfer means may be provided in the form of a port to which a cable can be connected where the port is adapted to transfer data from the entropy provider via a corresponding cable to the external computing device. For example, the transfer means may be realized in this case in the form of a USB port, Mini-USB port or Micro-USB port or a lightning port. When connecting this port with a corresponding cable to an external computing device, the entropy can be provided via this transfer means, i.e. via the port, through the cable to the external computing device.

It is intended that the data transferred via the transfer means is stored at the external computing device in a dedicated storage (e.g. for later use). However, the actual use of the entropy by the external computing device is not intended to limit the invention and is, therefore, arbitrary with respect to how this entropy is actually used, for example, in order to encrypt communication, provide random numbers for logging into or maintaining a connection for a banking account or any other application.

The entropy provided by the entropy supply may have the form of either random numbers and/or random sequences of bits. In the case of random numbers, this means that the entropy is provided in the form humanly readable sequences of digits, for example 123 and 456. In the case of the entropy being provided in the form of a random sequence of bits, the entropy is provided by the entropy supply in the form of a sequence of bits where the 0's and 1's are randomly distributed over the respective sequence.

The random numbers and/or the random sequence of bits may be provided in the form of numbers or sequences with a specific length (for example 20 digits in the case of random numbers or 40 bits in the case of a sequence of bits). However, it is also possible that the random numbers generated have almost arbitrary length and/or the random sequence of bits has arbitrary length. In the case of arbitrary length of the random numbers and/or sequence of bits, the length may be set to range from a minimum value (for example 20 digits or bits) to a maximum length (for example 500 digits or 2000 bits). The actual minimum length and/or maximum length, however, is not limited and may have any value as considered appropriate in view of, for example, security requirements regarding the encryption of communication with the respective entropy. It might even be the case that the complete storage of the computing device is filled in with random numbers or random bits, such as 1 GB, 5 GB, 10 GB or 100 GB. This can also depend on the available storage of the device.

The entropy supply 111 can be provided in a plurality of forms. Basically, the entropy supply may either comprise an entropy generator (and potentially associated components) or it may be provided in the form of a storage for storing entropy only.

In the first case, the entropy generator can be embodied in the form of a physical or algorithmic entropy generator. The first one refers to an entropy generator that uses a physical process (for example governed by the laws of thermodynamics or making use of quantum physical processes) in order to generate (true) random numbers due to the (true) randomness of the respective physical process. For example, the phase of a first "reference" laser source and the phase of a laser source that is driven close to the lasering threshold and close above the lasering threshold is completely arbitrary due to the laws of quantum mechanics. Making use of such a system embodied in the entropy supply results in arbitrary interference signals of the respective laser signals which can then be used to generate unpredictable random values (for example digits or bits).

Algorithmic entropy generators may be embodied in the entropy supply by, for example, providing a processor or other entity that uses a specific program code to generate random numbers. Those random numbers usually are only "pseudo" random numbers as they use a precisely defined and, therefore, deterministic algorithm that uses as initialization value for example the date or the actual time in order to create numbers or sequences or bits. As the underlying program code is deterministic, the resulting numbers or bits are not truly random but are "pseudo random".

In case the entropy supply is merely provided in the form of a storage for storing the entropy, this storage can be provided as a volatile or nonvolatile storage to which entropy can be provided by an external entropy source.

This entropy source may be a specifically dedicated computing system that generates entropy (in the form of random numbers or sequences or bits). In case the entropy provider is connected to this computing device for example via a wired or wireless connection (making, for example, use of the transfer means 114) entropy can be "downloaded" from this external entropy source and transferred to the storage where it is stored for later use.

Furthermore, the entropy provider comprises a power source 113 for providing power to the entropy supply. In the case of the entropy supply being provided in the form of an entropy generator, this power may be used to generate the entropy. Furthermore, in the case of the entropy supply being provided in the form of a storage, the power source may be used to power the storage in case it is embodied in the form of a volatile storage in order to maintain the information (i.e. entropy) in this volatile storage. Additionally, the power provided by the power source 113 may be used to transfer the entropy from the entropy supply via the transfer means to the external computing device 130. Specifically, if the transfer means are embodied in the form of a wireless transmitter, the power provided by the power source 113 may be used to power the wireless transmitter. Correspondingly, if the transfer means 114 are provided in the form of a USB port or any other physical port, the power provided by the power source may be used to generate corresponding electrical signals for transferring the entropy from the entropy supply to the external computing device via the port.

The power source 113 may be embodied in a variety of forms. In one embodiment, the power source is provided as at least one battery. Alternatively, the power source may be provided in the form of rechargeable batteries or other rechargeable energy units. In this case, the power source can be connected to an external power supply like an electric socket 120 as exemplarily depicted in figure 1. Once the rechargeable batteries are charged (either full or to a different demand), the entropy provider can be disconnected from the external power supply and can be taken along with the user for connecting to an external computing device and transferring entropy to the same.

In another alternative, the power source 113 may be provided in the form of one or more solar cells that can absorb solar energy and provide electrical energy generated therewith for powering the components of the entropy provider and specifically the entropy supply.

In any case, it is intended that the entropy provider is at least for a specific period of time "self standing" in the manner that it has its own integrated power source 113 that can provide power to at least the entropy supply for an amount of time. This allows the entropy provider to be carried along with a user and provide entropy to another external computing device without the need for an additional power source.

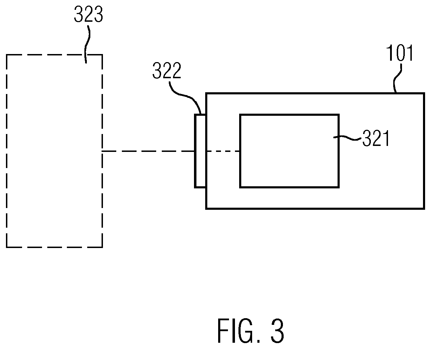

Furthermore, the entropy provider may comprise additional components 112. Such components may be internal circuitry or connections or other means that, for example, control the power source 113 and/or the entropy supply and/or the transfer means. They can be embodied in the form of one or more processors or storage devices or other means that are, for example, necessary to store or further process the entropy generated by the entropy generator in case the entropy supply is embodied in the form of an entropy generator. Furthermore, such components may be used in order to manage the storage of entropy in the entropy supply if it is embodied in the form of a storage device as discussed above and as will be discussed further with reference to figure 3. Those additional components can also further process the entropy generated in order to decide whether or not it is to be transferred to an external computing device (upon request).

For example, assuming that the entropy comprises a plurality of random numbers. If the length of the random numbers during their generation is left open, the random numbers may comprise random numbers that have a length below a given threshold (for example 100 digits) and random numbers that have a length exceeding this threshold. In case the further processes on the external computing device that make use of the entropy require random numbers of a minimum length of 100 digits, the additional components 112 can control the transfer of the entropy such that only random numbers with at least 100 digits are transferred to the external computing device while the others are either maintained in the entropy provider or are deleted. Of course, the threshold may be set to any predetermined value and the above is only an example.

Additionally, in order to increase the security of the further processes carried out on the external computing device making use of the entropy of the entropy provider, the components can make sure that the entropy that is transferred to the external computing device is completely erased from the entropy provider 100. This makes sure that entropy is not used several times which could weaken the security of the processes at the external computing devices making use of the entropy. Also, the entropy might be delivered with additional information and/or processing to securely transfer the entropy to the computing device.

The entropy provider may further comprise a housing 101 in which the dedicated components, i.e. the entropy supply, the transfer means 114 and the power source 113 as well as (if provided) the additional components 112 are provided. The housing 101 can comprise physically secure hardware so as to prevent opening of the entropy provider that might be necessary in certain security environments.

Figure 2 shows a further embodiment of the entropy provider as depicted in figure 1. In this embodiment, in addition to the components discussed so far, control means 215 are provided. Those control means can also form part of the additional components 112 described above but, as the control means described in this embodiment fulfil specific tasks, they are only depicted for ease of explanation as additional components.

The control means may be provided to control specific functionalities of the entropy provider. Among those functionalities, the control means may control the generation of entropy in case the entropy supply is embodied in the form of an entropy generator and/or they may control the provision of power from the power source to this entropy generator. In case the entropy supply is embodied in the form of a storage, the control means 215 may be provided to control the receiving of entropy from an external entropy source (see figure 3) and/or they may control the provision of entropy from the storage to the external computing device by making use of the transfer means 114.

The control means can comprise circuitry and/or processors for performing the above mentioned tasks. They may also comprise additional storage for, for example, storing specific programs that allow the control means 215 to control the other components. Basically, the control means may be embodied as automatically acting control means. For example, they may cause the entropy generator to generate entropy if a connection to an external computing device is established as long as the external computing device requests entropy from the entropy provider. In the same manner, if the entropy supply is provided in the form of a storage, the control means may control the components of the entropy provider to receive and store entropy from an external entropy source as long as a connection to the external entropy source is established and/or as long as the storage has further capability of storing additional entropy.

Further sophisticated programs may be provided with the control means that manage the provision or storage of entropy in a specific manner. Furthermore, the provision of entropy to different devices may be managed. This may include transferring either the same random numbers to a plurality of devices (2, 3 or more) or not transferring identical entropy to different devices.

In addition or alternatively to this automatic management of the respective functions of the entropy provider, the control means 215 may also comprise buttons 211 to 214 (or any other arbitrary number of buttons) that allow for physical interaction with a user. Instead of buttons, also other physical means or even virtual means may be provided for interaction with a user. For example, a touchscreen may be provided that can be actuated by the user. Also, (mobile) applications running on a computing device, like a smartphone, may be used to provide interaction with a user. Generally, the elements 211 to 215 may be seen to refer to "actuation means" that allow for an interaction with a user. The elements may be provided integrated with and/or remote to the entropy provider. Also a combination of actuation elements provided integrated with the entropy provider (like one or more buttons) and actuation means remote or external to the entropy provider (like a fingerprint scanner on a smartphone for authenticating the user of the entropy provider) can be realized. Also, applications running on additional hardware and including, for example a special user interface or a set of functions that can be activated by software, may be considered as actuation means in the sense of the invention.

In the description that follows, reference will be made to buttons for ease of explanation. However, these buttons may be considered only as specific examples of actuation means mentioned above. Any functionality provided by the buttons explained below may likewise be realized with any actuation means.

Upon actuation of one or more of these buttons, the control means 215 may perform their respective functionality. For example the button 211 may be used to cause the control means to start the provision of entropy from the entropy provider (specifically the entropy supply) to an external computing device. This means that the transfer of entropy from the entropy supply to the external computing device is preferably not immediately started once a corresponding connection via the transfer means is established. A further input from the user via the button 211 may be necessary to start this process where the control means 215 are then actuated to cause the entropy supply (and optionally also one or more of the additional components 112) to transfer the available entropy. A further activation of this button may cause a stop of the transfer of entropy from the entropy supply to the external computing device irrespective of whether the connection to the external computing device via the transfer means is still existing.

Correspondingly, there may be provided a further button 212 that, upon actuation, causes the control means to start or stop the transfer of entropy from an external entropy source to the entropy supply (for example in case the entropy supply is embodied in the form of a storage for entropy). A further button 213 may be provided that, upon actuation, causes the power source to provide power to an entropy generator of the entropy supply irrespective of whether there is a connection to an external computing device that requires entropy. Thereby, the user has full control of when entropy is generated with the entropy provider. A further button 214 may be provided that, upon actuation, activates the transfer means. Without actuation of this button, no connection may be established to any external device (be it an external entropy source or be it an external computing device requiring entropy). Thereby, specifically in the case of the transfer means being wireless transfer means, a further security barrier is established making it more difficult for a malicious attacker to get access to the entropy stored on the entropy provider as long as he has no physical access to the entropy provider.

Other functions may also be realized using these buttons depending on the functionality provided for the entropy provider.

Figure 3 shows a further embodiment of the entropy provider where the entropy provider comprises a storage 321 that is adapted to store entropy and to upload this entropy (via transfer means) to an external computing device requiring the entropy.

The entropy provider according to this embodiment of the invention does not comprise an integrated entropy generator and can, thus, not generate entropy on its own. However, it still comprises a power source as described with respect to figures 1 and 2 and will also comprise transfer means as described with respect to figures 1 and 2 for transferring entropy to an external computing device requiring the respective entropy. All other embodiments described with respect to the above figures 1 and 2 may also be applied in the embodiment of figure 3 (with the exception that no entropy generator is provided in the entropy provider according to figure 3).

In order to provide entropy to the storage 321, there may be a connecting means 322 provided with which a connection to an external entropy source 323 can be established. The connecting means 322 may be identical to the transfer means or they may be provided as other means. For example, while the transfer means mentioned above may be realized in the form of wireless transfer means, the connecting means 322 may be provided as a physical port for connecting a cable that can be connected to the external entropy source. Thereby, the access to the external entropy source can be restricted to devices that establish a wired connection to the external entropy source.

Once the entropy provider is charged with the respective entropy from the external entropy source, it can be disconnected from the external entropy source and later on connected to an external computing device for transferring entropy. In order to increase the security of the external entropy source further, it can be provided that a connection for data transfer between the entropy provider on the one side and the external entropy source on the other side can only be established as long as the entropy provider is not, at the same time, connected to an external computing device. Thereby, indirect access of the external computing device to the external entropy source via the entropy provider can be prevented.

The storage 321 of this embodiment may be provided either as volatile storage or as nonvolatile storage.

In the case of the storage being provided in the form of a volatile storage, maintaining the entropy provided to this storage requires energy all the time. Therefore, in this specific embodiment, the power source of the entropy provider may be adapted to permanently transfer a sufficient amount of power to the volatile storage for maintaining the entropy store therein. The storage may be embodied as a nonvolatile storage for example in the form of a flash or any other solid-state storage device. In order to reduce the dimensions of the entropy provider, realizations making use of flash-storages or other storages may be preferred compared to other hard drives.

In order to make sure that the storage can store sufficient entropy for providing it to at least one external computing device, the storage capacity of the storage device can be at least 100 MB or up to a plurality of gigabytes.

In the embodiments described above so far, the entropy supply was described to either comprise an entropy generator or to comprise a storage that can be provided with entropy via an external entropy source. However, also combinations are possible. For example, there can be provided a storage in the entropy provider in which entropy from an external entropy source is stored. In addition, an entropy generator as described above can be provided in the entropy provider to further generate entropy. The entropy generated by this entropy generator can either also be stored in the storage or there can be provided an additional storage to which the entropy generated by the entropy generator is stored. This can be useful in case the entropy generator generates entropy with a different security compared to the entropy generated by the external entropy source. If, for example, the entropy generator provided on the entropy provider is embodied in the form of an algorithmic entropy generator, its pseudorandom values may be useful for further applications on an external computing device only requiring a minor level of security. The external entropy source may then be embodied in a manner that provides entropy with a higher degree of security (for example true random numbers making use of one or more physical processes). Those random numbers are then transferred to the corresponding storage and are then used to be transferred on to an external computing device in case increased security, for example, for encrypting communication is needed. This provides the advantage that the energy required at the entropy provider can be reduced as the generation of real entropy making use of physical processes is usually larger compared to the generation of pseudo entropy using algorithmic entropy generators.

## Claims

1. An entropy provider for providing entropy to a computing device external to the entropy provider, the entropy provider comprising a power source and an entropy supply, wherein the power source is adapted to provide power to the entropy supply and wherein the entropy provider comprises transfer means for transferring the entropy from the entropy supply to an external computing device.

2. The entropy provider according to claim 1, wherein the entropy supply comprises an entropy generator for generating the entropy.

3. The entropy provider according to claim 2, wherein the entropy provider comprises a control means for controlling the generation of entropy by the entropy generator and/or the provision of power from the power source to the entropy generator.

4. The entropy provider according to claim 3, wherein the control means comprises at least one actuation means that, upon actuation, can cause the power supply to provide power to the entropy generator and/or causes the entropy generator to generate entropy and/or causes the entropy provider to provide entropy generated by the entropy generator to an external computing device.

5. The entropy provider according to claim 1, wherein the entropy supply comprises a storage for storing entropy and wherein the entropy provider comprises a receiving means for receiving entropy from an external entropy source and wherein the entropy provider is adapted to store entropy received from the external entropy source in the storage.

6. The entropy provider according to claim 5, wherein the entropy provider comprises control means for controlling the receiving of entropy from an external entropy source and/or the provision of entropy from the storage to an external computing device via the transfer means, wherein the control means optionally comprises at least one actuation means that, upon actuation, causes the entropy provider to start receiving entropy from the external entropy source and/or start providing entropy from the storage to the external computing device.

7. The entropy provider according to any of claims 1 to 6, wherein the entropy comprises random numbers and/or a random sequence of bits.

8. The entropy provider according to any of claims 1 to 7, wherein the power source comprises at least one of: a battery, a rechargeable battery that can be recharged via a power supply external to the entropy provider, a solar cell; and/or
wherein the transfer means comprise at least one of: a wireless transmitter for wirelessly transmitting entropy to an external computing device, a port for connecting a cable for data transfer for transferring entropy to an external computing device.

9. A method for transferring entropy from an entropy provider to a computing device external to the entropy provider, the entropy provider comprising a power source and an entropy supply, wherein the power source provides power to the entropy supply and wherein the entropy provider comprises transfer means that transfer the entropy from the entropy supply to the external computing device when the entropy provider and the external computing device are connected via the transfer means.

10. The method according to claim 9, wherein the entropy supply comprises an entropy generator for generating the entropy and wherein the entropy generator generates entropy when it is powered by the power source.

11. The method according to claim 10, wherein the entropy provider comprises a control means that controls the generation of entropy by the entropy generator and/or the provision of power from the power source to the entropy generator.

12. The method according to claim 11, wherein the control means comprises at least one actuation means, that, upon actuation, causes the power supply to start providing power to the entropy generator and/or causes the entropy generator to generate entropy and/or causes the entropy provider to provide entropy generated by the entropy generator to an external computing device.

13. The method according to claim 9, wherein the entropy supply comprises a storage that stores entropy and wherein the entropy provider comprises a receiving means that receives entropy from an external entropy source when the entropy provider is connected to the external entropy source via the receiving means and wherein the entropy provider stores entropy received from the external entropy source in the storage, wherein, optionally, the storage stores the entropy without requiring energy from the power source.

14. The method according to claim 13, wherein the entropy provider comprises control means that control the receiving of entropy from the external entropy source and/or the provision of entropy from the storage to the external computing device via the transfer means, wherein the control means optionally comprises at least one actuation means that, upon actuation, causes the entropy provider to start receiving entropy from the external entropy source and/or start providing entropy from the storage to the external computing device and/or provides the same entropy to more than one external computing device.

15. The method according to any of claims 9 to 14, wherein the entropy comprises random numbers and/or a random sequence of bits.
